# FASCICULE DE BREVET EUROPEEN

(11) **EP 0 433 151 B1**
(45) Date de publication et mention de la délivrance du brevet: **27.07.1994**
(21) Numéro de dépôt: 90403505.2
(22) Date de dépôt: 10.12.1990
(51) Int. Cl.: F16K 21/18, B67D 5/34

(54) **Limiteur de remplissage pour cuve de stockage d'un fluide**
Überfüllvorrichtung für Flüssigkeitsbehälter
Overfilling controller for a fluid storage tank

(30) Priorité: 15.12.1989 FR 8916604
(43) Date de publication de la demande: 19.06.1991
(73) Titulaire: LAFON PRODUCTION S.A., F-33530 Bassens (FR)
(72) Inventeur: Lagache, Roland, Le Canon, F-33950 Lège (FR)
(74) Mandataire: Levy, David

(56) Documents cités:
- EP-A- 0 312 320
- WO-A-89/11446
- FR-A- 2 331 732
- US-A- 3 963 041

## Description

La présente invention concerne un limiteur de remplissage pour cuve de stockage d'un liquide.

Il est connu de munir une cuve de stockage enterrée ou aérienne destinée à recevoir un liquide, d'un limiteur de remplissage dont la fonction est d'interrompre le remplissage de la cuve lorsque le liquide, dans ladite cuve, atteint un niveau prédéterminé, de manière à éviter un débordement qui serait préjudiciable à l'environnement de la cuve. Ceci est surtout recherché lorsque la cuve à remplir est située dans une station service débitant des hydrocarbures de divers types.

Les limiteurs les plus simples dans leur structure comprennent un corps, un clapet monté dans ledit corps et mobile entre une position d'ouverture correspondant au remplissage de la cuve et une position de fermeture correspondant à l'interruption du remplissage de ladite cuve, un flotteur, relié audit clapet, suit la montée du liquide dans la cuve de manière à fermer le clapet lorsqu'un niveau prédéterminé de liquide est atteint dans la cuve.

Un tel limiteur de remplissage est décrit par exemple dans le brevet US ADAMS n° 1 246 033.

D'autres limiteurs de remplissage plus perfectionnés ont été proposés ces dernières années, comme par exemple ceux décrits dans le brevet français n° 2 331 732, sur lequel repose le préambule de la revendication 1, et le brevet US n° 4 667 711. Les limiteurs de remplissage décrits dans ces brevets permettent leur passage dans des orifices ou des tubes de réception ménagés ou solidaires de la paroi supérieure de la cuve. En effet, il devenait nécessaire de concevoir des limiteurs dont les flotteurs pouvaient être insérés dans un tube plongeur prolongeant le corps et disposé à l'intérieur de la cuve. A cet effet, les tubes plongeurs étaient munis d'une fenêtre qui était fermée par une trappe lorsque le limiteur de remplissage était dans sa position de fonctionnement dans la cuve de stockage, le flotteur étant alors à l'extérieur dudit tube plongeur. Le positionnement du flotteur à l'intérieur du tube plongeur permet de réduire l'encombrement du limiteur de remplissage et le passage dans des orifices de faible diamètre.

Toutefois, il était nécessaire de prévoir une commande spécifique de la trappe tant à l'ouverture qu'à la fermeture de la fenêtre.

Dans le brevet français n° 2 331 732, la commande de la trappe est constituée par une tige munie d'un crochet à l'aide desquels on fait coulisser la trappe de la position d'ouverture à la position de fermeture de la fenêtre. Lorsque la trappe est en position de fermeture, on dégage le crochet et la tige de ladite trappe et on les retire hors du limiteur de remplissage.

Dans le brevet US n° 4 667 711, la commande de la trappe est assurée par une languette ou patte flexible qui est tirée pour amener la trappe dans la position de fermeture.

Dans les deux limiteurs de l'art antérieur décrits brièvement ci-dessus, il est difficile pour ne pas dire impossible d'ouvrir la trappe et permettre un nouveau positionnement du flotteur à l'intérieur du tube plongeur.

Dans la demande européenne n° EP-A-0 312 320, il est décrit un limiteur dont le tube plongeur présente sur toute sa longueur une section transversale circulaire à l'exception d'une zone qui correspond à une dépression ménagée dans la paroi du tube plongeur. La dépression doit être suffisamment profonde pour recevoir entièrement le flotteur au moment de l'introduction du limiteur de remplissage dans l'orifice de passage de la cuve de stockage.

La solution préconisée dans la demande européenne précitée présente néanmoins un inconvénient majeur qui consiste en un rétrécissement de la section de passage pour le liquide dans le tube plongeur, dans la zone où est prévue la dépression externe, et ce, parce qu'à la dépression externe correspond un bossage interne qui constitue un obstacle pour le liquide circulant dans le tube plongeur.

On connaît également par FR-A-2 631 611 un limiteur de remplissage qui présente ce même inconvénient majeur.

La présente invention a pour but de remédier aux inconvénients précités et de proposer un limiteur de remplissage pour cuve de stockage de construction très simple et comprenant un minimum de pièces tout en étant de fonctionnement fiable; ce limiteur de remplissage fait l'objet de la revendication 1 de la présente invention.

Un avantage de la présente invention réside dans le fait que la section de passage pour le fluide dans le limiteur n'est pas réduite et que le limiteur de remplissage peut être introduit dans la cuve de stockage à travers un orifice de passage relativement réduit du fait que le flotteur peut être introduit à l'intérieur du tube plongeur.

Selon une caractéristique complémentaire de la présente invention, le flotteur est de forme allongée dont la section transversale est sensiblement en forme de secteur circulaire, la face interne étant plane dans sa majeure partie avec au moins une partie concave, et en ce que ledit flotteur est relié audit clapet par un levier en forme de "chaise" dont la partie intermédiaire est inclinée et fait un angle supérieur à 90° avec la partie inférieure qui est également inclinée et alignée avec la génératrice supérieure du flotteur.

Cela permet au flotteur d'être introduit dans le tube plongeur lorsqu'on retire le limiteur de remplissage hors de la cuve de stockage. En effet, l'inclinaison de la partie inférieure du levier de liaison entre le clapet et le flotteur permet par contact glissant avec un tube fixe de passage qui équipe la cuve de stockage de faire pivoter le flotteur vers l'intérieur du tube plongeur.

D'autres avantages et caractéristiques apparaîtront à la lecture de deux modes de réalisation du limiteur de remplissage selon la présente invention, ainsi que des dessins annexés sur lesquels :
la figure 1 est une représentation schématique d'une cuve de stockage équipée avec un limiteur de remplissage selon la présente invention;
la figure 2 est une vue éclatée en perspective du limiteur de remplissage selon un premier mode de réalisation de l'invention;

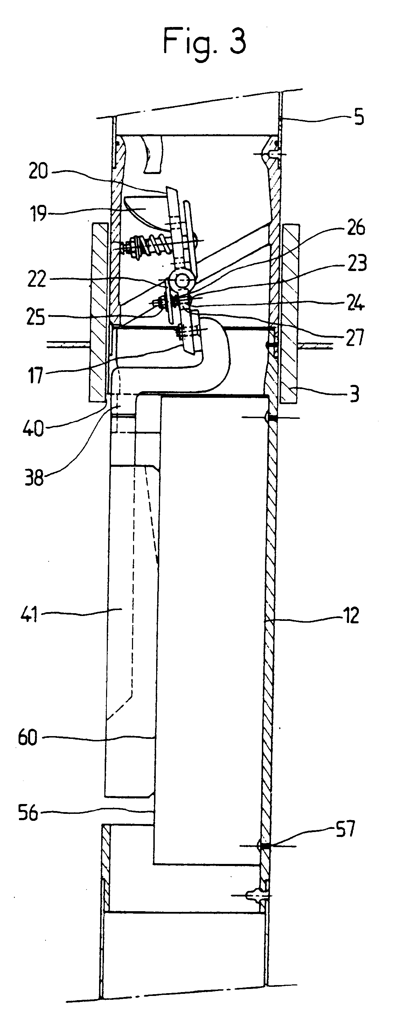

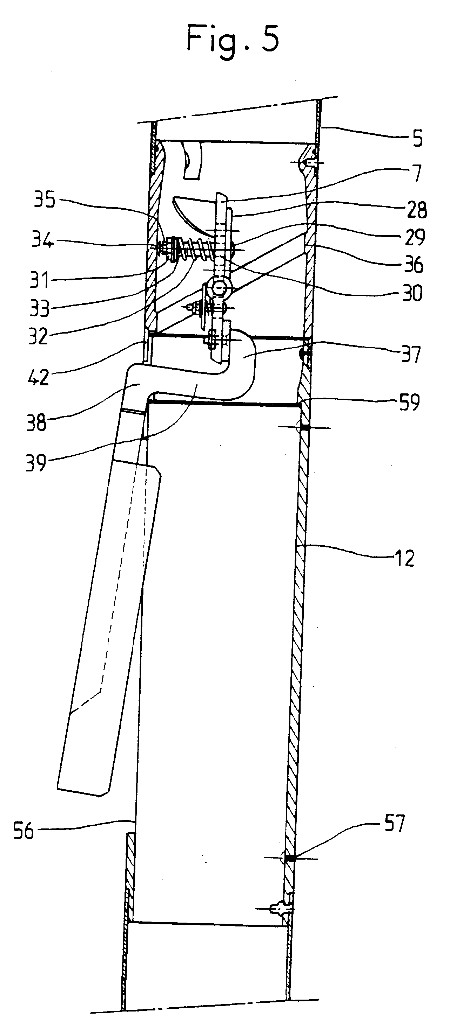

les figures 3 à 5 sont des vues en coupe du limiteur de remplissage représenté sur la figure 1 pour différentes positions du clapet et du flotteur;
la figure 6 est une vue en perspective éclatée d'un autre mode de réalisation de l'organe d'obturation de la fenêtre du tube plongeur.

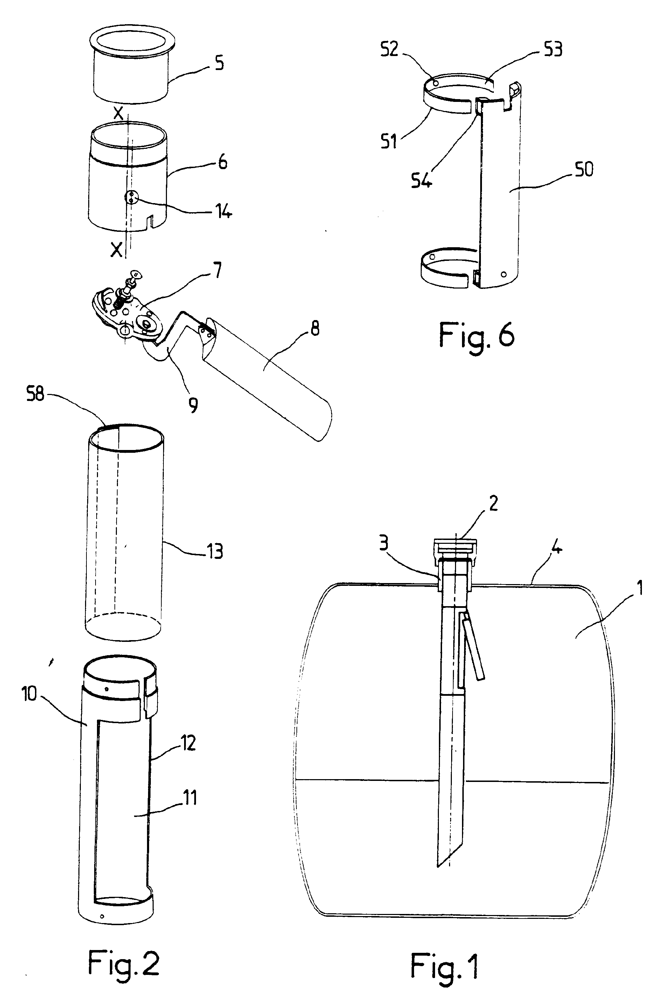

Le limiteur de remplissage selon la présente invention est destiné à équiper une cuve de stockage 1 d'un fluide tel qu'un hydrocarbure, la cuve étant munie d'un orifice de passage 2 délimité par la section interne d'un tube de passage 3 solidaire de la paroi supérieure 4 de la cuve 1 et dont une petite partie est représentée sur la figure 1. Le limiteur de remplissage est fixé, après introduction dans la cuve de stockage 1, sur le tube de passage 3 par tout moyen approprié tel qu'un support 5 qui est solidaire dudit limiteur de remplissage.

Le limiteur de remplissage, représenté sur la figure 2, comprend principalement un corps cylindrique 6 d'axe vertical X-X dans lequel est monté un clapet 7 susceptible d'être déplacé d'une position d'ouverture à une position de fermeture, un flotteur 8 relié au clapet 7 par un levier rigide 9, un tube plongeur cylindrique 10 qui est muni d'une fenêtre 11 ménagée sur une partie de paroi 12, et d'un organe d'obturation 13 de la fenêtre 11.

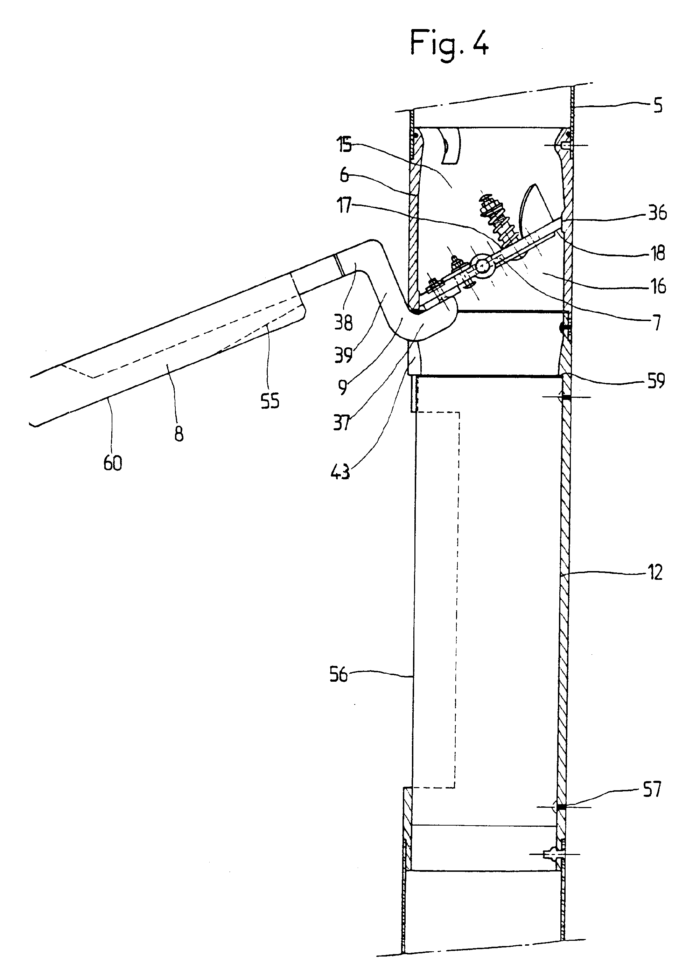

Le clapet 7 est du type papillon et il pivote autour d'un axe 14 qui est excentré par rapport à l'axe vertical X-X du corps cylindrique 6. Le clapet 7, en position de fermeture sur un siège 36 disposé sensiblement à 45° par rapport à l'axe X-X à l'intérieur dudit corps, comme cela est représenté sur la figure 4, délimite dans le corps cylindrique 6 deux chambres amont 15 et aval 16. La face du clapet 7 située du côté de la chambre amont 15 est la face amont 17 alors que l'autre face dudit clapet est la face aval 18.

Une portion de paroi courbe 19 est fixée perpendiculairement à la face amont 17 du clapet 7 et sert à éviter que la pression du liquide admis dans le corps cylindrique 6 lorsque la cuve de stockage se remplit, ne provoque la fermeture brutale dudit clapet 7 en raison des fortes pressions qui s'exerceraient sur la face amont 17 dudit clapet 7. De préférence, la portion de paroi 19, de forme sensiblement analogue à une visière de casquette, est disposée vers le bord extrême 20 du clapet 7, et présente une hauteur inférieure à la distance séparant la face amont 17 du clapet de la paroi interne du corps lorsque le flotteur est disposé à l'intérieur du tube plongeur et présente une hauteur inférieure à la distance éloigne du flotteur 8.

Une soupape d'accélération de vidange 22 est prévue sur la face amont 17 du clapet 7 et elle est solidaire d'une tige 23 passant à travers un orifice 24. Un écrou 25 d'ajustage du tarage d'un ressort 26 est monté sur la tige 23. De ce fait, tant que la pression de liquide régnant dans la chambre amont 15 est supérieure au tarage du ressort 26, la soupape 22 reste appliquée contre la face de clapet 17 et interdit toute communication entre les chambres amont 15 et aval 16 par les orifices 27. Par contre, dès que la différence de pression régnant dans lesdites chambres est inférieure à une valeur prédéterminée correspondant au tarage du ressort 26, la soupape 22 l'ouvre et le liquide contenu dans la chambre amont 15 s'écoule par les orifices 27 dans la chambre aval 16 et, par suite, dans la cuve de stockage.

Une soupape d'amortissement d'onde de choc 28 est prévue sur la face aval 18 du clapet 7. La soupape d'amortissement est montée à l'extrémité d'une tige creuse 29 passant à travers un orifice 30 ménagé dans ledit clapet. Un écrou 31 d'ajustage du tarage d'un ressort 32 est vissé sur un filetage extérieur 33 de la tige 29. Une butée 34 constituée par une tige filetée munie d'une tête légèrement élargie est vissée dans un taraudage interne de la tige 29. La butée 34 est maintenue en position bloquée par un écrou de blocage 35. Lorsque la fermeture du clapet 7 sur son siège 36 s'effectue brutalement, une onde de choc est créée dans la chambre amont 15, ladite onde de choc se propageant dans un flexible ou tuyau de remplissage reliant le limiteur à un camion citerne ou autre source de liquide. En l'absence de la soupape d'amortissement 28, la propagation de l'onde de choc entre le clapet 7 et une vanne de commande du camion citerne provoquerait des ouvertures et fermetures successives du clapet contre son siège. La soupape d'amortissement 28 s'ouvre dès la création de l'onde de choc, à la fermeture brutale du clapet 7 : de ce fait, on crée une chute de la surpression et l'onde de choc est écrétée très rapidement et le clapet 7 n'a donc pas tendance à s'ouvrir. On constate ainsi que la soupape d'amortissement 28 ne s'ouvre que lorsque la différence de pression régnant dans les chambres amont et aval est supérieure à une valeur prédéterminée qui est donnée par le tarage du ressort 32.

Le flotteur 8, en matière appropriée, est de forme allongée et comprend une face interne qui est plane en majeure partie sauf en une partie 55 qui est concave. La section du flotteur, pour la partie plane de la face interne, est en forme de secteur circulaire.

Le flotteur 8 est relié au clapet 7 par un levier rigide 9 en forme de "chaise". La partie supérieure 37 du levier est solidaire du clapet 7 alors que la partie inférieure 38 est reliée au flotteur. La partie intermédiaire 39 est inclinée sur l'horizontale de manière à faire un angle inférieur à 90° avec la partie supérieure 37. La partie inférieure 38 est inclinée sur la verticale, de manière à faire un angle égal ou supérieur à 90° avec la partie intermédiaire, et elle est alignée avec la génératrice supérieure du flotteur de façon que, lors du retrait du limiteur de remplissage hors de la cuve de stockage, le contact glissant de la partie inférieure 38 du levier 9 sur le bord inférieur 40 du tube de passage 3 provoque un basculement dudit levier et, par suite, un déplacement du flotteur vers le tube plongeur, et permette une extraction dudit limiteur de remplissage aussi facile que son introduction dans ledit tube de passage. De préférence, le levier 9 est prolongé par deux lames 41 qui sont noyées dans la masse du flotteur 8, de manière à rigidifier davantage ce dernier.

Le pivotement du levier 9 par rapport au corps 6 est possible grâce à une échancrure 42 ménagée à la partie inférieure dudit corps 6, ladite échancrure 42 étant en alignement avec une échancrure 43 ménagée aussi dans la partie supérieure du tube plongeur 10.

L'organe d'obturation 13 est constitué par une feuille métallique mince et souple d'épaisseur comprise entre 0,2 et 0,6 mm de préférence, la feuille 56 est en acier inoxydable qui ne garde pas en mémoire les déformations qu'elle peut subir. En d'autres termes, le matériau utilisé ne comprend pas de déformation rémanente, c'est-à-dire qu'il revient toujours à son état initial après une déformation.

La feuille d'acier inoxydable 56 est enroulée sur elle-même et introduite dans le tube plongeur, la fixation dans la position adéquate étant réalisée par des rivets 57 disposés le long d'un bord 58 de ladite feuille et rivetés sur la partie de paroi 12 opposée à la fenêtre 11.

Un épaulement annulaire 59 protège le bord supérieur de la feuille 56 et permet d'avoir une continuité pour le passage du liquide en limitant de ce fait au maximum les fuites entre la feuille 56 et le tube plongeur 10.

Selon un autre mode de réalisation représenté sur la figure 6, l'organe d'obturation 13 est constitué par une plaque 50 et de deux anneaux élastiques 51. Les anneaux élastiques 51 sont fixés sur la partie de paroi 12a, opposée à la fenêtre 11 au moyen de rivets 52 et sont insérés par leurs extrémités libres 53 dans des pinces 54 prévues sur la plaque 50.

Le fonctionnement du limiteur de remplissage de la présente invention est le suivant.

On assemble d'abord le support 5 sur le corps 6 du limiteur de remplissage, puis on rabat le flotteur 8 vers le tube plongeur 10 afin de l'amener à l'intérieur dudit tube plongeur 10. Cela est rendu possible par le fait que la partie concave 55 de la face interne 60 du flotteur 8 vient en appui sur la feuille enroulée 56 qui se déforme en s'enroulant sur elle-même en raison de sa propre élasticité, dégageant ainsi un espace suffisant pour le passage du flotteur à travers la fenêtre 11 et son logement dans le tube plongeur 10. Le positionnement du flotteur 8 dans le tube plongeur 10 correspond à une position du clapet 7 en retrait par rapport à la position d'ouverture. Dans ce cas, la butée 34 est en appui sur la paroi interne du corps 6 à l'encontre du ressort 32, dégageant ainsi la soupape d'amortissement 28 de la face amont 18.

Le limiteur de remplissage, avec le flotteur 8 dans le tube plongeur 10 sont introduits dans le tube de passage 3 de la cuve de stockage. Lorsque le limiteur de remplissage est à l'intérieur de la cuve de stockage 1 et dès que le flotteur 8 n'est plus en contact avec la paroi interne du tube de passage 3, il prend une position normale dite de repos, à l'extérieur du tube plongeur 10, libérant ainsi la feuille métallique qui se déroule pour venir obturer la fenêtre 11 et permettre un écoulement de liquide avec une perte de charge négligeable, à l'intérieur du tube plongeur 10. Le flotteur est amené dans la position de repos grâce à l'action combinée du ressort 32 qui referme la soupape d'amortissement 28 et de la butée 34 qui définit la position d'ouverture du clapet 7.

Le liquide, admis dans le limiteur de remplissage et provenant d'une source non représentée, s'écoule sur et autour de la portion de paroi courbe 19, ce qui l'empêche d'exercer une pression sur la face amont et évite une fermeture intempestive du clapet 7.

Le flotteur 8 qui suit la montée de liquide dans la cuve de stockage 1 amorce le déplacement du clapet 7 vers la position de fermeture lorsque le niveau de liquide atteint un seuil prédéterminé.

Du fait de l'excentricité entre l'axe de pivotement 14 du clapet 7 et l'axe vertical X-X du corps 6, il se crée un couple de déséquilibre tendant à fermer rapidement le clapet 7 sur le siège 36. La fermeture brutale du clapet 7 entraîne une montée en pression dans la chambre amont et la création d'une onde de choc. Dans un premier temps, la montée en pression dans la chambre amont 15 provoque la fermeture de la soupape 22. Dans un deuxième temps, l'onde de choc ayant atteint un niveau excessif, provoque l'ouverture de la soupape d'amortissement 28, mettant ainsi en communication les chambres amont et aval 15 et 16. Ceci limite la possibilité pour le clapet 7 de s'ouvrir à nouveau et la création de coups de bélier.

Lorsque le niveau de liquide a atteint le seuil prédéterminé, le remplissage de la cuve de stockage 1 est interrompu. La pression dans la chambre amont 15 est stabilisée et dépend de la hauteur de charge entre la source d'alimentation et le clapet 7.

Une fuite très légère est persistante et elle est due aux tolérances de fabrication. Dès que le préposé au remplissage ferme la vanne de commande de la source d'alimentation, il se produit une décompression de la chambre amont 15 en raison de ladite fuite légère et, lorsque la décompression atteint la valeur prédéterminée par le tarage du ressort 26, la soupape 22 s'ouvre et accélère ainsi la chute de pression dans la chambre amont jusqu'à une valeur presque nulle. Le clapet 7 s'ouvre alors par l'effet contrepoids du flotteur 8 hors du liquide de manière à permettre la vidange totale de la chambre amont 15 et du flexible reliant le limiteur à la source.

Toute fausse manoeuvre du préposé tendant à continuer le remplissage sera immédiatement sanctionnée par la fermeture du clapet 7 sur son siège 36.

## Revendications

1. Limiteur de remplissage pour cuve de stockage d'un liquide, ledit limiteur étant destiné à être introduit dans ladite cuve de stockage (1) à travers un orifice de passage (3) ménagé dans une paroi de ladite cuve de stockage et comportant un corps (6) d'axe vertical (X-X) et qui est prolongé par un tube plongeur (10), un clapet (7) monté dans ledit corps et susceptible d'être déplacé entre une position d'ouverture et une position de fermeture, un siège de clapet (36) prévu dans ledit corps et sur lequel vient en appui ledit clapet dans la position de fermeture, une fenêtre (11) ménagée dans la paroi (12) du tube plongeur, un flotteur (8) relié audit clapet et susceptible d'être introduit au moins partiellement dans ledit tube plongeur à travers ladite fenêtre, ledit flotteur amenant ledit clapet de la position d'ouverture vers la position de fermeture pour un niveau prédéterminé du liquide dans ladite cuve de stockage, et un organe d'obturation (13) de ladite fenêtre, caractérisé en ce que l'organe d'obturation (13), déformable élastiquement, est monté dans le tube plongeur et susceptible d'être appliqué sur les parties de paroi interne situées de part et d'autre de ladite fenêtre grâce à sa propre élasticité et obturer ladite fenêtre lorsque le flotteur est situé à l'extérieur du tube plongeur.

2. Limiteur de remplissage selon la revendication 1, caractérisé en ce que l'organe d'obturation (13) de la fenêtre est constitué par une feuille (56) élastique enroulée sur elle-même et qui ne présente pas de déformation rémanente.

3. Limiteur de remplissage selon la revendication 2, caractérisé en ce que la feuille élastique est constituée par une feuille métallique.

4. Limiteur de remplissage selon la revendication 3, caractérisé en ce que la feuille métallique est une feuille en acier inoxydable.

5. Limiteur de remplissage selon la revendication 4, caractérisé en ce que la feuille en acier inoxydable est de faible épaisseur, comprise entre 0,2 et 0,6 mm.

6. Limiteur de remplissage selon l'une des revendications 2 à 5, caractérisé en ce que la feuille élastique est fixée le long d'un des bords verticaux sur la paroi opposée à la fenêtre.

7. Limiteur de remplissage selon la revendication 1, caractérisé en ce que le clapet est du type papillon et pivote autour d'un axe (14) décalé par rapport à l'axe vertical du corps.

8. Limiteur de remplissage selon la revendication 1, caractérisé en ce que le siège de clapet (36) est incliné à environ 45° sur l'axe vertical du corps.

9. Limiteur de remplissage selon la revendication 1, caractérisé en ce que le flotteur (8) est de forme allongée dont la section transversale est sensiblement en forme de secteur circulaire, la face interne étant plane dans sa majeure partie avec au moins une partie concave (55) et en ce que ledit flotteur est relié audit clapet par un levier (9) en forme de "chaise" dont la partie intermédiaire (39) est inclinée et fait un angle égal ou supérieur à 90° avec la partie inférieure (37) qui est également inclinée et alignée avec la génératrice supérieure du flotteur (8).

10. Limiteur de remplissage selon la revendication 1, caractérisé en ce que le tube plongeur (10) comprend sur la paroi interne un épaulement annulaire (59) disposé au-dessus du bord supérieur (56) de l'organe d'obturation (13).

11. Limiteur de remplissage selon la revendication 1, caractérisé en ce que l'organe d'obturation de la fenêtre est constitué par une plaque (50) en contact sur au moins deux anneaux élastiques (51) qui prennent appui sur la paroi interne (12a) du tube plongeur opposée à la fenêtre.

12. Limiteur de remplissage selon la revendication 11, caractérisé en ce que les anneaux élastiques (51) sont situés au voisinage des extrémités supérieure et inférieure de la plaque (50).

13. Limiteur de remplissage pour cuve de stockage d'un liquide, selon l'une des revendications 1 à 12, caractérisé en ce que le clapet (7), qui délimite une chambre amont (15) située du côté de l'orifice de passage (3) de la cuve de stockage et une chambre aval (16) située du côté de la fenêtre, comprend deux ouvertures (24, 30) susceptibles d'être obturées indépendamment l'une de l'autre par deux soupapes de fermeture (22, 28) montées en opposition, une soupape amont (22) étant montée sur la face amont et une soupape aval (28) étant montée sur la face aval dudit clapet.

14. Limiteur de remplissage selon la revendication 13, caractérisé en ce que la soupape amont (22) est fermée lorsque la différence de pression régnant dans les chambres amont (15) et aval (16) est supérieure à une valeur prédéterminée.

15. Limiteur de remplissage selon la revendication 14, caractérisé en ce que la soupape amont est sollicitée vers la position d'ouverture par un ressort (26) qui est taré à ladite valeur prédéterminée.

16. Limiteur de remplissage selon la revendication 13, caractérisé en ce que la soupape aval (28) est susceptible de faire communiquer les chambres amont (15) et aval (16) lorsque la différence de pression régnant entre lesdites chambres atteint une valeur prédéterminée.

17. Limiteur de remplissage selon la revendication 16, caractérisé en ce que la soupape amont est sollicitée vers la position de fermeture par un ressort (32) taré à ladite valeur prédéterminée.

18. Limiteur de remplissage selon la revendication 17, caractérisé en ce que la soupape aval (28) est solidaire d'une tige creuse (29) dans laquelle est susceptible d'être positionnée une butée réglable (34) qui permet un positionnement du clapet (7) à l'ouverture par rapport à la paroi interne du corps.

19. Limiteur de remplissage selon les revendications 17 et 18, caractérisé en ce que le ressort de tarage (32) est disposé autour de la tige creuse de manière à permettre l'ouverture de ladite soupape aval lorsque ladite butée réglable est en appui sur la paroi interne du corps et que le flotteur est disposé à l'intérieur du tube plongeur pour permettre au clapet d'être en position de retrait par rapport à la position d'ouverture.

20. Limiteur de remplissage selon la revendication 13, caractérisé en ce qu'une portion de paroi courbe (19) est prévue sensiblement perpendiculaire à la face amont du clapet.

21. Limiteur de remplissage selon la revendication 20, caractérisé en ce que ladite portion de paroi (19) est disposée entre l'axe de pivotement (14) et le bord de clapet (7) éloigné du flotteur (8).

22. Limiteur de remplissage selon l'une des revendications 20 ou 21, caractérisé en ce que la hauteur de la portion de paroi (19) est inférieure à la distance séparant la face amont (17) du clapet de la paroi interne du corps lorsque le flotteur est disposé à l'intérieur du tube plongeur.

## Patentansprüche

1. Befüllungsbegrenzungseinrichtung für Flüssigkeits-Vorratsbehälter, wobei die Begrenzungseinrichtung dazu bestimmt ist, durch eine in einer Wand des Vorratsbehälters ausgesparte Durchlaßöffung (3) in den Vorratsbehälter (1) eingeführt zu werden, und versehen ist mit einem Körper (6) mit vertikaler Achse (X-X), der durch ein Tauchrohr (10) verlängert ist, einer Verschlußklappe (7), die im Körper angebracht ist und zwischen einer geöffneten Position und einer geschlossenen Position beweglich ist, einem Verschlußklappensitz (36), der im Körper vorgesehen ist und an dem sich die Verschlußklappe in der geschlossenen Position abstützt, einem Fenster (11), das in der Wand (12) des Tauchrohrs ausgespart ist, einem Schwimmer (8), der mit der Verschlußklappe verbunden ist und durch das Fenster wenigstens teilweise in das Tauchrohr eingeführt werden kann, wobei der Schwimmer bei einem vorgegebenen Flüssigkeitspegel im Vorratsbehälter die Verschlußklappe von der geöffneten Position in die geschlossene Position bewegt, und einem Verschlußelement (13) des Fensters, dadurch gekennzeichnet, daß das Verschlußelement (13), das elastisch verformbar ist, im Tauchrohr angebracht ist und kraft seiner eigenen Elastizität gegen die beiderseits des Fensters befindlichen Teile der Innenwand gedrückt werden kann und das Fenster verschließen kann, wenn sich der Schwimmer außerhalb des Tauchrohrs befindet.

2. Befüllungsbegrenzungseinrichtung gemäß Anspruch 1, dadurch gekennzeichnet, daß das Verschlußelement (13) des Fensters durch eine elastische Folie (56) gebildet ist, die zusammengerollt ist und keine bleibende Verformung annimmt.

3. Befüllungsbegrenzungseinrichtung gemäß Anspruch 2, dadurch gekennzeichnet, daß die elastische Folie aus einer Metallfolie gebildet ist.

4. Befüllungsbegrenzungseinrichtung gemäß Anspruch 3, dadurch gekennzeichnet, daß die Metallfolie eine Folie aus rostfreiem Stahl ist.

5. Befüllungsbegrenzungseinrichtung gemäß Anspruch 4, dadurch gekennzeichnet, daß die Folie aus rostfreiem Stahl eine geringe Dicke besitzt, die im Bereich zwischen 0,2 und 0,6 mm liegt.

6. Befüllungsbegrenzungseinrichtung gemäß einem der Ansprüche 2 bis 5, dadurch gekennzeichnet, daß die elastische Folie längs einer der vertikalen Kanten an der dem Fenster gegenüberliegenden Wand befestigt ist.

7. Befüllungsbegrenzungseinrichtung gemäß Anspruch 1, dadurch gekennzeichnet, daß die Verschlußklappe vom Klappenventiltyp ist und um eine Achse (14) angelenkt ist, die zur vertikalen Achse des Körpers versetzt ist.

8. Befüllungsbegrenzungseinrichtung gemäß Anspruch 1, dadurch gekennzeichnet, daß der Verschlußklappensitz (36) zur vertikalen Achse des Körpers um ungefähr 45° geneigt ist.

9. Befüllungsbegrenzungseinrichtung gemäß Anspruch 1, dadurch gekennzeichnet, daß der Schwimmer (8) eine langgestreckte Form besitzt, dessen Querschnitt im wesentlichen die Form eines Kreissektors besitzt, wobei die Innenfläche in ihrem größeren Teil eben ist und wenigstens einen konkaven Teil (55) besitzt, und daß der Schwimmer der Verschlußklappe über einen Hebel (9) in "Sitz"-Form verbunden ist, dessen Mittelteil (39) geneigt ist und mit dem unteren Teil (37) einen Winkel bildet, der gleich oder größer als 90° ist, wobei der untere Teil (37) ebenfalls geneigt ist und auf die obere Erzeugende des Schwimmers (8) ausgerichtet ist.

10. Befüllungsbegrenzungseinrichtung gemäß Anspruch 1, dadurch gekennzeichnet, daß das Tauchrohr (10) an der Innenwand eine ringförmige Schulter (59) aufweist, die über der oberen Kante (56) des Verschlußelementes (13) angeordnet ist.

11. Befüllungsbegrenzungseinrichtung gemäß Anspruch 1, dadurch gekennzeichnet, daß das Verschlußelement des Fensters durch eine Platte (50) gebildet ist, die mit wenigstens zwei elastischen Ringen (51) in Kontakt ist, die sich an der dem Fenster gegenüberliegenden Innenwand (12a) des Tauchrohrs abstützen.

12. Befüllungsbegrenzungseinrichtung gemäß Anspruch 11, dadurch gekennzeichnet, daß sich die elastischen Ringe (51) in der Nähe der oberen und unteren Enden der Platte (50) befinden.

13. Befüllungsbegrenzungseinrichtung für Flüssigkeits-Vorratsbehälter gemäß einem der Ansprüche 1 bis 12, dadurch gekennzeichnet, daß die Verschlußklappe (7), die eine auf seiten der Durchlaßöffnung (3) des Vorratsbehälters befindliche stromaufseitige Kammer (15) von einer auf seiten des Fensters befindlichen stromabseitigen Kammer (16) abgrenzt, zwei Öffnungen (24, 30) umfaßt, die unabhängig voneinander durch zwei Verschlußventile (22, 28) verschlossen werden können, welche einander gegenüber angebracht sind, wobei ein stromaufseitiges Ventil (22) an der stromaufseitigen Fläche und ein stromabseitiges Ventil (28) an der stromabseitigen Fläche der Verschlußklappe angebracht ist.

14. Befüllungsbegrenzungseinrichtung gemäß Anspruch 13, dadurch gekennzeichnet, daß das stromaufseitige Ventil (22) geschlossen ist, wenn die zwischen der stromaufseitigen Kammer (15) und der stromabseitigen Kammer (16) herrschende Druckdifferenz größer als ein vorgegebener Wert ist.

15. Befüllungsbegrenzungseinrichtung gemäß Anspruch 14, dadurch gekennzeichnet, daß das stromaufseitige Ventil durch eine Feder (26), die auf den genannten vorgegebenen Wert austariert ist, zur geöffneten Position vorbelastet ist.

16. Befüllungsbegrenzungseinrichtung gemäß Anspruch 13, dadurch gekennzeichnet, daß das stromabseitige Ventil (28) zwischen der stromaufseitigen Kammer (15) und der stromabseitigen Kammer (16) eine Verbindung herstellen kann, wenn die zwischen den Kammern herrschende Druckdifferenz einen vorgegebenen Wert erreicht.

17. Befüllungsbegrenzungseinrichtung gemäß Anspruch 16, dadurch gekennzeichnet, daß das stromaufseitige Ventil durch eine Feder (32), die auf den genannten vorgegebenen Wert austariert ist, zur geschlossenen Position vorbelastet ist.

18. Befüllungsbegrenzungseinrichtung gemäß Anspruch 17, dadurch gekennzeichnet, daß das stromabseitige Ventil (28) mit einem Hohlstift (29) verbunden ist, in dem ein einstellbarer Anschlag (34) angeordnet werden kann, welcher bei der Öffnung der Verschlußklappe (7) eine Positionierung derselben in bezug auf die Innenwand des Körpers erlaubt.

19. Befüllungsbegrenzungseinrichtung gemäß den Ansprüchen 17 und 18, dadurch gekennzeichnet, daß die Regulierungsfeder (32) um den hohlen Stift angeordnet ist, derart, daß sie das Öffnen des stromabseitigen Ventils erlaubt, wenn der einstellbare Anschlag an der Innenwand des Körpers anschlägt und wenn der Schwimmer innerhalb des Tauchrohrs angeordnet ist, um der Verschlußklappe zu ermöglichen, in bezug auf die geöffnete Position die zurückgezogene Position einnehmen zu können.

20. Befüllungsbegrenzungseinrichtung gemäß Anspruch 13, dadurch gekennzeichnet, daß ein Abschnitt der gekrümmten Wand (19) im wesentlichen senkrecht zur stromaufseitigen Fläche der Verschlußklappe vorgesehen ist.

21. Befüllungsbegrenzungseinrichtung gemäß Anspruch 20, dadurch gekennzeichnet, daß der Wandabschnitt (19) zwischen der Schwenkachse (14) und der vom Schwimmer (8) entfernten Kante der Verschlußklappe (7) angeordnet ist.

22. Befüllungsbegrenzungseinrichtung gemäß einem der Ansprüche 20 oder 21, dadurch gekennzeichnet, daß die Höhe des Wandabschnittes (19) kleiner als die Strecke ist, die die stromaufseitige Fläche (17) der Verschlußklappe von der Innenwand des Körpers trennt, wenn der Schwimmer innerhalb des Tauchrohrs angeordnet ist.

## Claims

1. Overfill device for insertion in a liquid storage tank (1) through a passage orifice (3) provided in a wall of said storage tank, said overfill device comprising a body (6) having a vertical axis (X-X), a plunger tube (10) extending said body, a flap valve (7) mounted in said body and movable between an opening position and a closing position, a valve seat (36) in said body with which seat said flap valve is cooperative and against which seat said valve comes to bear in said closing position, an aperture (11) provided in a wall (12) of said plunger tube, a float (8) connected to said flap valve and capable of being at least partly inserted in said plunger tube through said aperture, said float being adapted and arranged in combination with said flap valve to bring said flap valve from said opening position to said closing position at a predetermined level of the liquid in said storage tank, and a closure member (13) of said aperture (11), characterized in that said closure member (13) is elastically deformable and mounted in said plunger member and is capable, owing to resilience of said closure member, of being applied against parts of said inner surface of said plunger tube on both sides of said aperture and thereby closing said aperture when said float is located outside said plunger tube.

2. Overfill device according to claim 1, wherein said closure member (13) comprises a resilient sheet (56) rolled onto itself and having no remanent deformation.

3. Overfill device according to claim 2, wherein said resilient sheet (56) is a metal sheet.

4. Overfill device according to claim 3, wherein said metal sheet is of stainless steel.

5. Overfill device according to claim 4, wherein said stainless steel sheet is 0.2 to 0.6 mm thick.

6. Overfill device according to claim 2, wherein said resilient sheet (56) has vertical edges and is fixed alongside one of said vertical edges to a part of said wall of said plunger tube opposite said aperture.

7. Overfill device according to claim 1, wherein said flap valve is a butterfly valve having a pivot pin (14) which offset relative to said vertical axis (X-X).

8. Overfill device according to claim 1, wherein said valve seat (36) is inclined at substantially 45° to said vertical axis (X-X).

9. Overfill device according to claim 1, wherein said float (8) is elongated and has a cross-section which is substantially in the shape of a circular sector, said float has an inner side which is in major part planar with at least one concave part (55), and a substantially "chair"-shaped lever (9) connects said float to said flap valve and has a lower portion and an inclined intermediate portion (39) which makes an angle equal to at least 90° with said lower portion (37), said lower portion being also inclined and in alignment with an upper generatrix of said float (8).

10. Overfill device according to claim 1, wherein said plunger tube (10) comprises on said inner surface thereof an annular shoulder (59) located above an upper edge (56) of said closure member (13).

11. Overfill device according to claim 1, wherein said closure member comprises a plate (50) and at least two resilient rings (51) which are in contact with said plate and are in bearing relation to a part of said inner surface of said wall (12a) of said plunger tube which is opposite said aperture.

12. Overfill device according to claim 11 wherein said resilient rings (51) are located in the vicinity of said upper and lower ends of said plate (50).

13. Overfill device according to one of said claims 1-12, wherein said flap valve (7) defines an upstream chamber (15) adjacent to said passage orifice (3) and a downstream chamber (16) adjacent to said aperture (11), said flap valve having two ports (24, 30) closable independently of each other with two closing valves (22, 28) opposite to each other, an upstream closing valve (22) being mounted on the upstream side and a downstream closing valve (28) mounted on the downstream side of said flap valve.

14. Overfill device according to claim 13, wherein, when the difference between the pressures prevailing in said upstream and downstream chambers (22, 28) exceeds a predetermined value, said upstream valve (22) is closed by said pressure difference.

15. Overfill device according to claim 14, comprising a spring (26) which has a stiffness corresponding to said predetermined value and is cooperative with said upstream valve (22) for biasing said upstream valve to a opening position.

16. Overfill device according to claim 13, wherein said downstream valve (28) is capable of putting said upstream and downstream chambers (15, 16) in communication with each other when the difference between the pressures prevailing in said chambers reaches a predetermined value.

17. Overfill device according to claim 16, comprising a spring (32) whose stiffness corresponds to said predetermined value and is cooperative with said upstream valve for biasing said upstream valve to a closing position.

18. Overfill device according to claim 17, comprising a hollow rod (29) connected to said downstream valve (28) and an abutment member (34) mounted in said hollow rod in an adjustable position for positioning said flap valve (7) in said opening position thereof relative to said inner surface of said body.

19. Overfill device according to claims 17 and 18, wherein said spring (32) is disposed around said hollow tube (29) in such manner as to permit said downstream valve (28) to open the respective port when said adjustable abutment member (34) bears against said inner surface of said body and said float is disposed inside said plunger tube so as to permit said flap valve (7) to adopt a position beyond said opening position of said flap valve.

20. Overfill device according to claim 13, wherein a curved wall portion (19) is provided on said upstream side of said flap valve in a position substantially perpendicular to said upstream side.

21. Overfill device according to claim 20, wherein said wall portion (19) is located between a pivot pin (14) and an edge of said flap valve (7) remote from said float (8).

22. Overfill device according to claim 20 or 21, wherein said wall portion (19) has a height which is less than the distance between said upstream side (17) of said flap valve and said inner surface of said body when said float is disposed inside said plunger tube.
